# EUROPEAN PATENT APPLICATION

(11) **EP 1 635 161 A2**
(43) Date of publication of application: **15.03.2006**
(21) Application number: 05255118.1
(22) Date of filing: 18.08.2005
(51) Int. Cl.: G01N 21/03, G01N 21/64, B01L 3/00

(54) **Testing plate**

(30) Priority: 13.09.2004 JP 2004264899
(71) Applicant: ALPS ELECTRIC CO., LTD., Ota-ku Tokyo 145 (JP)
(72) Inventor: Takamura, Shozo, Alps Electric Co., Ltd., Tokyo (JP); Yamashita, Tatsumaro, Alps Electric Co., Ltd., Tokyo (JP); Shibuya, Yoshihisa, Alps Electric Co., Ltd., Tokyo (JP)
(74) Representative: Kensett, John Hinton

(57) **Abstract**

Light shielding portions are provided along a flow path on a top surface of a plate substrate at both sides, that is, an X1 side (right side) and an X2 side (left side) of the flow path. Then, when a fluorescent intensity is measured to determine whether a test sample reacts or not, a small amount of light emitted from the plate substrate and a lid body is also properly shielded by the light shielding portions, so that the stability of measuring the fluorescent intensity with respect to beads arranged inside the flow path can be improved.

## Description

### BACKGROUND OF THE INVENTION

### 1. Field of the Invention

The present invention relates to a simple testing plate capable of performing, for example, a blood test and a DNA test by a medical institution or an individual, and more specifically, to a testing plate capable of more accurately performing fluorescence measurement for determining whether a biochemical reaction between probe DNA and sample DNA occurs or not.

### 2. Description of the Related Art

Recently, a testing chip for testing a material collected from the human body, such as blood, has been increasingly developed. For example, a DNA chip where multiple kinds of DNA fragments (probes) are previously implanted in a substrate made of, for example, glass can measure expression of genes (test sample or target) collected from the human body at one time.

Whether the test sample DNA reacts to the DNA fragments in the probe, for example, is determined by the following method.

First, a test sample is previously subjected to a chemical treatment so as to contain a fluorescent dye. The test sample containing the fluorescent dye flows into the DNA chip, and excitation light is radiated thereon. The test sample is bonded to only DNA fragments having sequences corresponding to DNA sequences of the test sample, among the DNA fragments of the probe. Therefore, if excitation light is radiated, only the DNA fragments bonded to the test sample containing the fluorescent dye emits light due to the fluorescent dye. Accordingly, it is determined by the emission whether the test sample DNA reacts to the DNA fragments in the probe. By examining the sequences of the emitted DNA fragments, the kinds of DNA of the test sample are determined.

The following Japanese Unexamined Patent Application Publication No. 2003-181257 discloses a cell substrate having a micro flow path capable of performing chemical analysis of liquid produced by synthesis and reaction of various kinds of liquid, or of mixing the minimum amount of liquid to decrease the amount of waste liquid.

In Japanese Unexamined Patent Application Publication No. 2003-181257, a resin substrate 31 and a cover 33 constituting a cell substrate are all transparent. Light is emitted to the resin substrate 31 and the cover 33, so that optical characteristics of liquid synthesized in a canal 32 provided on the resin substrate 31 are measured.

Accordingly, the resin substrate 31 and the cover 33 need to be made of a material which exhibits low fluorescence. However, even though the resin substrate 31 and the cover 33 made of, for example, glass are used, light is not emitted at all, but a small amount of light is emitted from the resin substrate 31 and the cover 33. Therefore, there is a problem in that the light becomes a noise when a fluorescent intensity is measured.

In order to solve the above-described problems, the resin substrate 31 or the cover 33 may be made of a material which exhibits lower fluorescence. However, the resin substrate 31 and the cover 33 need to satisfy various conditions, such as high heat resistance and ease of manufacturing, as well as low fluorescence, but there exists no material which satisfies such conditions. For this reason, it is preferable that the structure of the cell substrate, not the material forming the resin substrate or the cover, satisfy low fluorescence.

### SUMMARY OF THE INVENTION

The present invention has been finalized in view of the drawbacks inherent in the conventional testing plate, and it is an object of the present invention to provide a testing plate capable of accurately performing fluorescence measurement for determining whether a biochemical reaction between probe DNA and sample DNA occurs or not.

According to an aspect of the present invention, a testing plate includes a plate substrate having a concave-shaped flow path; and a lid body that is joined to the plate substrate. In the testing plate, light shielding portions are provided in at least a portion of the concave portion constituting the flow path and/or on a top surface of the plate substrate along the flow path.

According to this structure, light emitted from the plate substrate and the lid body can be shielded by the light shielding portions. Therefore, it is possible to reliably perform fluorescence measurement for determining whether the biochemical reaction between probe DNA and sample DNA occurs or not.

In the above-mentioned structure, it is preferable that the light shielding portions be formed along the flow path on the top surface of the plate substrate at both sides of the flow path. Accordingly, a light shielding property can be properly improved, and the light shielding portions can be easily formed.

In the above-mentioned structure, it is preferable that the light shielding portions function as electrode portions. A voltage is applied to the electrode portions to generating an electrochemical reaction, such as an oxidation-reduction reaction, so that hybridization can be performed at high speed.

In the above-mentioned structure, preferably, each of the electrode portions is provided with terminals which project toward the inside of the concave portion from both sides of the flow path, and the terminals protruding from one side of the flow path and the terminals protruding from the other side are alternately disposed in the flow direction of the flow path. Accordingly, an electrochemical reaction, such as an oxidation-reduction can be effectively triggered.

In the above-mentioned structure, it is preferable that the light shielding portions function as heating portions. Accordingly, heating to a predetermined reaction temperature and maintenance of the reaction temperature can be easily performed, so that a predetermined reaction can be effectively triggered. In addition, the air inside the flow path is expanded by the heating portions, so that the material inside the flow path can be rapidly transmitted to a predetermined place, or drain liquid can be rapidly dried.

In the above-mentioned structure, it is preferable that the light shielding portions be made of a material capable of absorbing laser beams when the plate substrate and the lid body are laser-welded, and that the plate substrate and the lid body be laser-welded with the light shielding portions interposed therebetween.

### BRIEF DESCRIPTION OF THE DRAWINGS

FIG. 1A is a plan view illustrating a testing plate of the present invention;
FIG. 1B is a cross-sectional view taken along the IB-IB of FIG. 1A;
FIG. 2 is a diagram explaining a method of measuring a fluorescent intensity according to the present invention;
FIG. 3 is a cross-sectional view corresponding to FIG. 1B, and shows a state where a light shielding portion of the present invention is provided in another portion;
FIG. 4 is a cross-sectional view corresponding to FIG. 1A, and shows a modification of the testing plate of the present invention;
FIG. 5A is a plan view illustrating a plate substrate which is provided with a modification of the light shielding portion of the present invention;
FIG. 5B is a cross-sectional view taken along the VB-VB of FIG. 5A; and
FIG. 6 is a cross-sectional view corresponding to FIG. 1B, and shows another modification of the light shielding portion of the present invention.

### DESCRIPTION OF THE PREFERRED EMBODIMENT

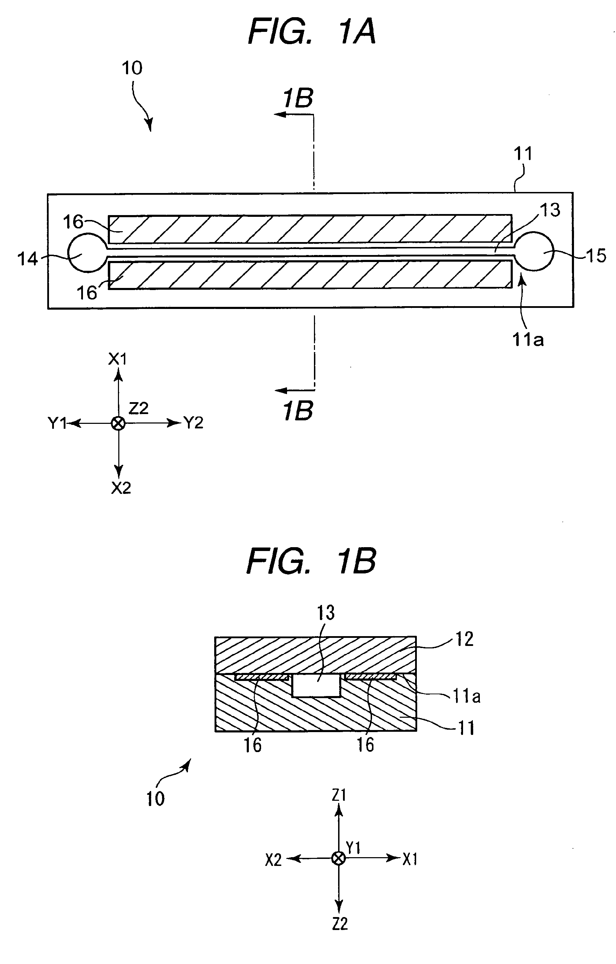

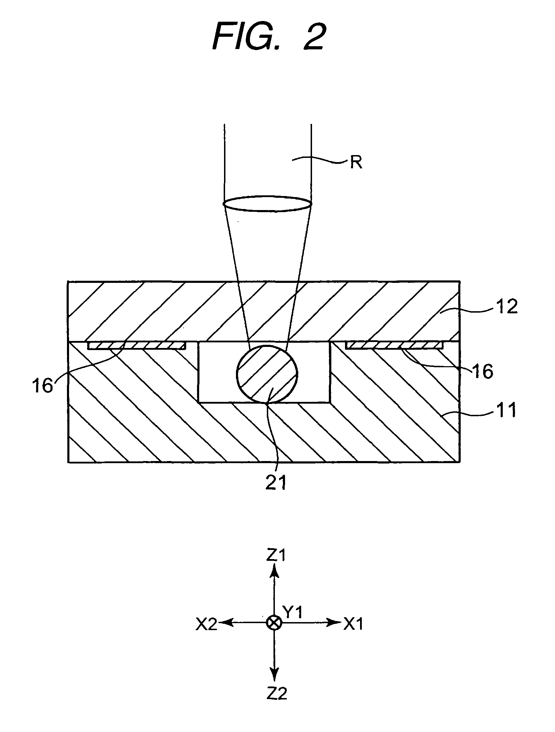

FIG. 1A is a plan view illustrating a testing plate of the present invention. FIG. 1B is a cross-sectional view taken along the line IB-IB of FIG. 1A. FIG. 2 is a diagram explaining a method of measuring a fluorescent intensity in the present invention. Moreover, in FIG. 1, oblique lines are shown so as to highlight light shielding portions.

A testing plate 10 shown in FIGS. 1A and 1B is a plate for performing a predetermined test where a test sample, such as blood collected from the human body, reacts to a predetermined reagent or the like. When the testing plate 10 is used as, for example, a DNA chip, the collected blood is subjected to a predetermined treatment so as to be used.

The testing plate 10 has a substantially rectangular-parallelepiped shape which has a predetermined thickness to extend in the longitudinal direction (Y1-Y2 direction in FIG. 1A) perpendicular to the width direction (X1-X2 direction in FIG. 1A). Moreover, the testing plate 10 may have shapes other than the substantially rectangular-parallelepiped shape.

As shown in FIG. 1B, the testing plate 10 is composed of a plate substrate 11 and a lid body 12. The plate substrate 11 and the lid body 12 are made of, for example, glass or resin. Further, the plate substrate 11 and the lid body 12 are formed of a material having a predetermined fluorescence intensity. Particularly, when the testing plate 10 is used as a DNA chip or a protein chip, it is preferable that the testing plate 10 be formed of a material, such as silica glass, polydimethylsiloxane (PDMS), or polymethyl methacrylate (PMMA), which exhibits low fluorescence and has high chemical resistance.

When the testing plate 10 is made of resin, it is preferable that the testing plate 10 be formed by injection molding. In some cases, the testing plate 10 is subjected to hot pressing, so that a groove is formed on a top surface 12a of the plate substrate 11 to have a high aspect ratio. In addition, when the testing plate 10 is made of glass, it is molded by hot pressing.

Moreover, the plate substrate 11 and the lid body 12 may be not made of the same material. However, if they are made of the same material, there is an advantage in that the plate substrate 11 and the lid body 12 are easily joined to each other without an adhesive, for example.

On a top surface 11a of the plate substrate 11, a flow path 13 having a predetermined width and length is formed in a concave shape to extend in a straight line in the Y1-Y2 direction of FIGS. 1A. Since the flow path 13 is formed in a straight line, turbulence does not occur therein when a material flows in the flow path. Moreover, the flow path 13 may have shapes other than the line shape.

An inlet 14 for injecting a material is provided at the end of the flow path 13 in the Y1 side of FIG. 1A, and an outlet 15 for discharging the material is provided at the end of the flow path 13 in the Y2 side of FIG. 1A.

As shown with oblique lines in FIGS. 1A and 1B, light shielding portions 16 are provided on the top surface 11a of the plate substrate 11 along the flow path 13 in the X1 side (right side) and the X2 side (left side), respectively.

The light shielding portions 16 are formed to have a darker color, such as black, than the plate substrate 11 and the lid body 12 so as not to reflect light. Further, the light shielding portions 16 are coated with a material which has an excellent light-shielding property, compared to the plate substrate 11 and the lid body 12. It is preferable that the light shielding portions 16 having a predetermined width be formed across the overall length of the flow path 13.

The testing plate 10 of the present invention is used as, for example, a DNA chip.

When the testing plate 10 is used as a DNA chip, first, a plurality of beads 21 on which probes (multiple kinds of DNA fragments) are fixed flow into the inlet 14 so as to be arranged inside the flow path 13. Since the beads 21 are made of, for example, glass or fiber, various kinds of fluorescent dyes are combined in different proportions.

Test samples (genes collected from the human body) are injected through the inlet 14 into the flow path 13 where the beads 21 are arranged. After the test samples are filled inside the flow path 13, excitation light R is radiated to the flow path 13 from the upper direction (the Z1 direction of FIG. 2), as shown in FIG. 2. The test samples react and are bonded to only DNA fragments having sequences corresponding to the DNA sequences of the test sample, among multiple kinds of DNA fragments in the probe. Then, only the DNA fragments which have reacted to the test samples emit light corresponding to the fluorescent dye. When light is emitted, the sequences of the DNA fragments of the probes are examined, so that the kinds of DNA of the test samples are distinguished. Alternatively, by measuring the fluorescent intensity of fluorescent light, it is analyzed whether the test samples react or not.

Since the plate substrate 11 is made of a material having a predetermined fluorescent intensity, light having a predetermined fluorescent intensity is also emitted from the plate substrate 11 by radiation of the excitation light R. In the present invention, however, the light shielding portions 16 are preferably provided along the flow path 13 across the overall length of the flow path 13 in the right side and the left side of the flow path 13, respectively. Therefore, when the fluorescent intensity is measured, a small amount of light emitted from the plate substrate 11 and the lid body 12 can be also properly shielded by the light shielding portions 16, which makes it possible to improve stability of measuring the fluorescent intensity with respect to the respective beads 21 arranged in the flow path 13.

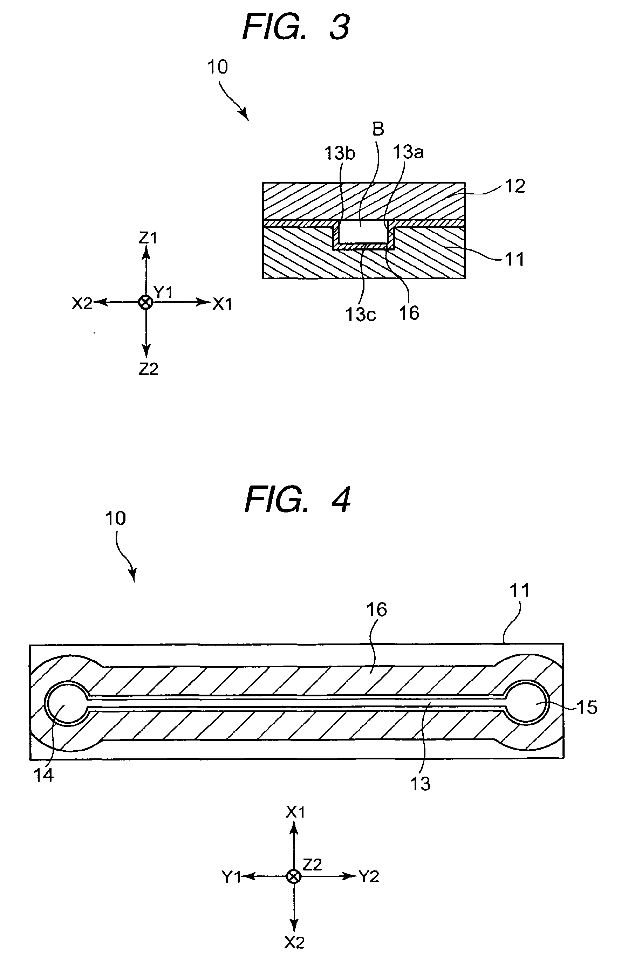

FIG. 3 is a cross-sectional view corresponding to FIG. 1B, showing a state where the light shielding portion of the present invention is provided in another place.

In FIGS. 1A and 1B, the light shielding portions 16 are provided along both sides of the flow path 13 (the X1 side and the X2 side of the drawings) only on the top surface 11a of the plate substrate 11. In the method shown in FIG. 3, however, the light shielding portions 16 are provided on all surfaces of the right side surface 13a in the X1 side, the left side surface 13b in the X2 side, and the inner bottom surface 13c in the Z2 side (downward) inside a concave portion constituting the flow path 13. In this way, the influence of light emission from the plate substrate 11 inside the flow path 13 can be prevented. Similar to the case of FIG. 1B, light emission from the respective beads 21 arranged inside the flow path 13 can be reliably perceived, so that the fluorescent intensity can be accurately measured. As a result, it can be determined whether the test sample has reacted or not.

FIG. 4 is a plan view corresponding to FIG. 1A, and shows a modification of the testing plate of the present invention.

In the present invention, the light shielding portion 16 may also be provided on the top surface 11a of the plate substrate 11 around the inlet 14 and the outlet 15, as shown in FIG. 4. Further, the light shielding portion 16 may also be provided inside the concave portion constituting the inlet 14 and the outlet 15.

For example, when the outlet 15 is a region where the test sample and the probes react to each other, light emitted from the plate substrate 11 and the lid body 12 in the vicinity of the outlet 15 needs to be properly shielded because the outlet 15 is a test region. For this reason, as shown in FIG. 4, it is preferable that the light shielding portion 16 be provided around the outlet 15 or the inlet 14, according to the type of test.

According to the type of test, the light shielding portion 16 may be provided around the outlet 15 or the inlet 14, or it may be provided only inside the concave portion constituting the outlet 15 or the inlet 14.

In the present invention, the light shielding portion 16 may be provided in the concave portion constituting the flow path 13 and on at least a portion of the top surface 11a of the plate substrate 11 along the flow path 13. However, it is preferable that the light shielding portion 16 be formed along the flow path 13 on the top surface 11a of the plate substrate 11 in both sides of the flow path 13. Accordingly, the light shielding portion 16 can be easily formed.

It is more preferable that the light shielding portion 16 be also provided inside the concave portion constituting the flow path 13, but the light shielding portion 16 needs to be formed so that the flow path 13 is not closed.

In order to improve the light shielding property of the light shielding portion 16, carbon black or graphite, serving as a pigment, can be added to the light shielding portion 16. Alternatively, the light shielding portion 16 may be made of, for example, carbon or zinc oxide.

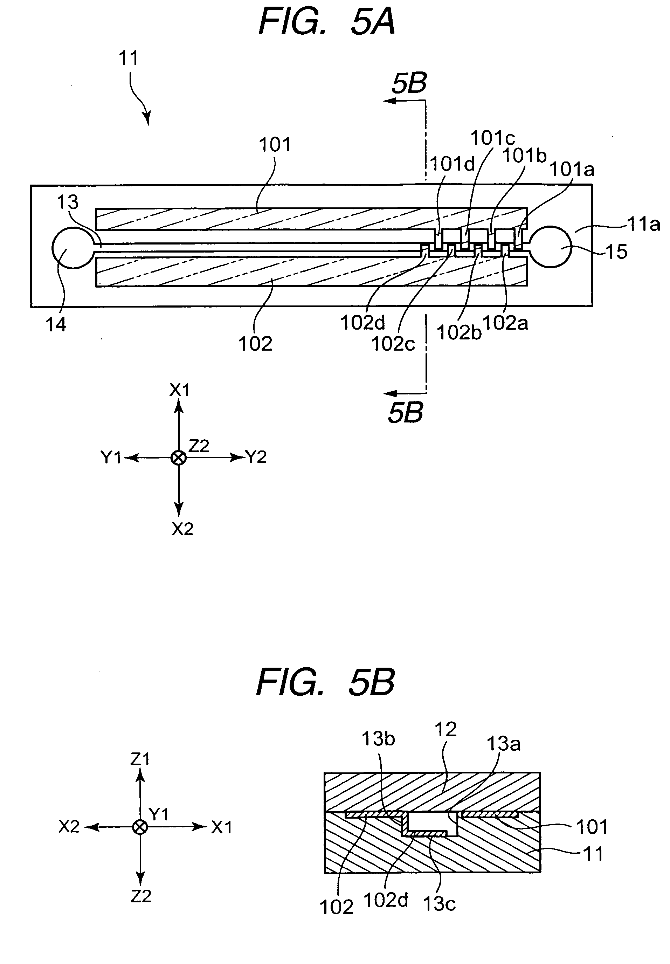

FIG. 5A is a plan view illustrating the plate substrate on which a modification of the light shielding portion of the present invention is provided, and FIG. 5B is a cross-sectional view taken along the line VB-VB of FIG. 5A. Moreover, in FIG. 5A, in order to highlight the state where the light shielding portion is provided, the light shielding portion is represented with two-dot chain lines.

In the modification, as a light shielding portion, a metal film 101 is provided along the flow path 13 on the X1 side of the flow path 13 in FIG. 5A on the top surface 11a of the plate substrate 11, as represented by the two-dot chain lines in FIG. 5A. Further, a metal film 102 is similarly provided on the X2 side of the flow path 13 in FIG. 5A. The metal films 101 and 102 have a darker color than the plate substrate 11 and the lid body 12 so as not to reflect light. Further, the metal films 101 and 102 are coated with a material having a more excellent light-shielding property than the plate substrate 11 and the lid body 12 so as to function as the light shielding portions. Moreover, the metal films 101 and 102 may be made of a material having an excellent light-shielding property. Alternatively, a material having an excellent light-shielding property may be coated on the surfaces of the metal films 101 and 102.

The metal films 101 and 102 having a predetermined width are formed across the overall length of the flow path 13.

In the end portions of the metal films 101 and 102 in the Y2 side of FIG. 5A, a plurality of terminal portions 101a (102a), 101b (102b), 101c (102C), and 101d (102d), which are spaced at predetermined intervals, are formed in the flow direction (the Y1-Y2 direction) of the flow path 13 to project toward the inside of the flow path 13, respectively. The terminal portions 101a, 101b, 101c, and 101d projecting from the metal film 101 and the terminal portions 102a, 102b, 102c, and 102d projecting from the metal film 102 are alternately disposed in the flow direction of the flow path 13.

As shown in FIG. 5B, the respective terminal portions (the terminal portion 102d is shown in FIG. 5B) are formed along a side surface 13b (or 13a) and a bottom surface 13c of the concave portion constituting the flow path 13 on the top surface 11a of the plate substrate 11.

In the present embodiment, the metal films 101 and 102 having the terminal portions can function as pectinate electrodes.

It is preferable that the metal films 101 and 102 be made of, for example, Cr. If the metal films 101 and 102 are made of Cr, the surfaces of the metal films 101 and 102 need not to be coated with a material having an excellent light-shielding property, because the color of Cr is close to black.

For example, one of the metal films 101 and 102 is set to an oxidation potential of a material in blood which is desired to be measured, and the other metal film is set to a reduction potential of the material. Then, a predetermined potential is applied to the test sample. Then, the terminal portions provided to the metal film where the oxidation potential is set operate as oxidation electrode terminal portions, and the terminal portions provided to the metal film where the reduction potential of the material is set operate as reduction electrode terminal portions. The material causes an oxidation-reduction reaction on the terminal portions of both metal films, and thus a current is generated by the oxidation-reduction reaction. By measuring the generated current, the content of the material in blood can be measured.

In the modification, the pectinate electrodes are used for measuring the content of the material. Therefore, the terminal portions of the pectinate electrode operating as the oxidation electrode terminal portions and the terminal portions of the pectinate electrode operating as the reduction electrode terminal portions face each other inside the flow path 13. Then, a normal concentration gradient is formed immediately between the terminal portions facing each other, so that high-sensitivity measurement can be performed in a short time. In addition, a so-called redox cycle occurs between the terminal portions facing each other. As a result, a current value to be measured can be apparently increased, so that the current can be easily measured. In addition, since the redox cycle occurs, the concentration of the material is prevented from being reduced during measurement, which makes it possible to accurately measure the content of the material. In addition, even when the amount of the material is extremely small, the measurement can be performed for a long time.

In addition, DNA chips are provided on the terminal portions formed in the metal films 101 and 102, or DNA probes are provided inside the flow path 13 between the terminal portions formed in the metal films 101 and 102. According to an electrochemical reaction, such as an oxidation-reduction reaction, hybridization can occur at higher speed than the related art.

As shown in the modification, the measurement of the fluorescent intensity can be stabilized, even when the light shielding portions (the metal films 101 and 102) are used as electrodes.

Moreover, in the above-mentioned modification, the pectinate electrodes are used as the electrodes for measuring the content of the material. The electrodes are not limited to pectinate electrodes, but may be spherical electrodes, disc-type electrodes, cylindrical electrodes and the like. In this case, quick-response and high-sensitivity measurement can also be performed.

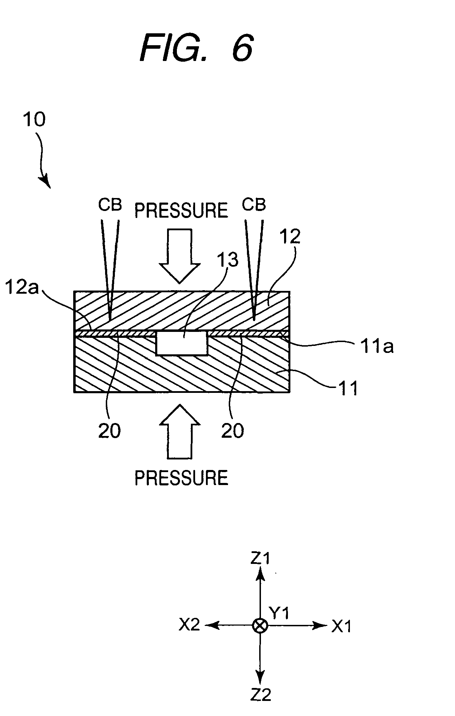

FIG. 6 is a cross-sectional view corresponding to FIG. 1B, and shows another modification of the light shielding portion of the present invention.

Carbon black is contained as a pigment in light shielding portions 20 of this modification. The light shielding portions 20 are formed along the flow path 13 so as to be laid across the overall length of the flow path 13 in both sides, that is, the right and left sides of the flow path 13 on the top surface 11a of the plate substrate 11. Moreover, in FIG. 1A, the light shielding portion 16 is partially formed between the flow path 13 and the side surface of the plate substrate 11 in the width direction (the X1-X2 direction) of the plate substrate 11. In FIG. 6, however, the light shielding portions 20 are formed on the entire surface of the plate substrate 11 between the flow path 13 and the side surface of the plate substrate 11 in the width direction of the plate substrate 11.

In this modification, carbon black is contained in the light shielding portion 20, and the light shielding portion 20 is made of a material capable of absorbing a laser beam when the plate substrate 11 and the lid body 12 are welded by using a laser. Therefore, between the plate substrate 11 and the lid body 12, a material capable of absorbing a laser beam is provided as the light shielding portion 20 having carbon black contained therein. As shown in FIG. 6, pressure is applied to the plate substrate 11 and the lid body 12 in the vertical direction. Further, as represented by arrow in FIG. 6, a laser beam LB is radiated from, for example, a laser diode (not shown). Then, the laser beam LB is absorbed by the carbon black inside the light shielding portion 20, and heat is radiated from the light shielding portion 20, so that the light shielding portion 20 is melted. Furthermore, the heat is transmitted to both the plate substrate 11 and the lid body 12 due to heat transfer, so that the top surface 11a of the plate substrate 11 and the bottom surface 12a of the lid body 12 can be easily joined. As such, if the carbon black is mixed into the light shielding portion 20, the light shielding portion 20 can also function as a laser beam absorbing portion at the time of laser welding. However, the light shielding portion 20 does not absorb excitation light when the fluorescent intensity is measured.

In this modification, the light shielding portion 20 has an excellent light shielding property, and can shield light emitted from the plate substrate 11 and the lid body 12. Therefore, the measurement of the fluorescent intensity can be stabilized.

Moreover, the light shielding portion 20 does not need to be formed across the entire surface between the flow path 13 and the side surface of the plate substrate 11 in the width direction of the plate substrate 11. If the joining strength of the plate substrate 11 and the lid body 12 is maintained, the light shielding portion 20 may be partially provided between the flow path 13 and the side surface of the plate substrate 11 in the width direction of the plate substrate 11, as shown at least in FIGS. 1A and 1B.

The light shielding portion of the present invention can be also used as a heating portion. When the light shielding portion is used as a heating portion, heating to a predetermined reaction temperature and maintenance of the reaction temperature can be easily performed, so that a predetermined reaction can be effectively performed. In addition, the air inside the flow path 13 is expanded by the heating portion, so that the material inside the flow path 13 can be rapidly transmitted to a predetermined place, or a drain fluid remaining inside the flow path 13 can be rapidly dried.

Moreover, the case in which only one flow path is provided in the plate substrate 11 has been described above. However, the number of flow paths is not limited to one, but a plurality of flow paths may be provided.

The testing plate 10 of the present invention can be used as a DNA chip or a protein chip for simple diagnosis. In addition, the testing plate 10 can be also used as µ-TAS (micro-total analysis system) where reaction, separation, analysis, and the like can be performed on one plate, a Lab-on-chip, or a plate for micro factory.

As described above, according to the testing plate of the present invention, light emitted from the plate substrate and the lid body can be shielded by the light shielding portion, and it is possible to accurately perform fluorescence measurement for determining whether the biochemical reaction between probe DNA and sample DNA occurs or not.

## Claims

1. A testing plate comprising:
a plate substrate having a concave-shaped flow path; and
a lid body that is joined to the plate substrate,
wherein light shielding portions are provided in at least a portion of the concave portion constituting the flow path and/or on a top surface of the plate substrate along the flow path.

2. The testing plate according to claim 1,
wherein the light shielding portions are formed along the flow path on the top surface of the plate substrate at both sides of the flow path.

3. The testing plate according to claim 1 or 2,
wherein the light shielding portions function as electrode portions.

4. The testing plate according to claim 3,
wherein each of the electrode portions is provided with terminals which project toward the inside of the concave portion from both sides of the flow path, and the terminals protruding from one side of the flow path and the terminals protruding from the other side are alternately disposed in the flow direction of the flow path.

5. The testing plate according to claim 1 or 2,
wherein the light shielding portions function as heating portions.

6. The testing plate according to claim 1 or 2,
wherein the light shielding portions are made of a material capable of absorbing laser beams when the plate substrate and the lid body are laser-welded, and the plate substrate and the lid body are laser-welded with the light shielding portions interposed therebetween.
